# EUROPEAN PATENT APPLICATION

(11) **EP 2 650 104 A1**
(43) Date of publication of application: **16.10.2013**
(21) Application number: 13163364.6
(22) Date of filing: 11.04.2013
(51) Int. Cl.: B29C 51/32, B29C 45/14, B29C 44/14, B29C 43/40, B29C 37/02

(54) **Apparatus and method for in-mold trimming of a molded product**

(30) Priority: 13.04.2012 US 201213446083
(71) Applicant: International Automotive Components Group North America, Inc., Southfield MI 48034 (US)
(72) Inventor: David, Dooley, Troy, MI Michigan 48098-2551 (US)
(74) Representative: Liesegang, Eva

(57) **Abstract**

A molding apparatus (30) to trim a molded product (10) which comprises an outer member (12) and a substrate member (20) is disclosed, with the molding apparatus comprising a first mold half (40) and a second mold half (42) operable together to define a mold cavity (44) to form the molded product therein and edge-wrap at least a portion of the substrate with the outer member; a trimming device (52) operable to trim the outer member at the edge-wrapped portion (22) of the molded product as the first mold half and/or the second mold half move in an opening direction relative to one another; and the trimming device comprising shearing means, the shearing means comprising a pair of cooperating shearing edges (58,68) with one shear edge provided by the first mold half and the other shear edge provided by the second mold half.

## Description

### FIELD

The present disclosure relates to in-mold trimming of a molded product, such as an automotive trim panel, and more particularly, molds and methods for in-mold trimming of a molded product.

### BACKGROUND

U.S. Patent No. 5,462,421 discloses a method and mold apparatus for forming and trimming a vehicle inner door panel. The panel is a shaped laminate including a vinyl cover layer and a structural foam backing layer having a glass fiber reinforcing substrate. Upper and lower mold members have peripheral seals which define a mold cavity when the mold is closed. A plurality of movable trim blades are carried by the lower mold member adjacent the seal. The trim blades move among retracted, intermediate and extended positions. Hydraulic rams open and close the mold and move the trim blades.

As set forth in the '421 Patent, hydraulic cylinder 20 operates to open and close the mold members, and a plurality of hydraulic units (e.g. 54a) operate with sufficient force for trim blades (e.g. 74b) to cut through vinyl layer 102 and glass mat 104. What is needed is a mold and a method which does not require the expense and complexity to cut the vinyl layer 102 and glass mat 104 as disclosed in the '421 Patent.

### SUMMARY

According to the present disclosure, a molding apparatus is provided to trim a molded product which comprises an outer member and a substrate member. The molding apparatus includes a trimming device operable to trim the outer member at an edge-wrapped portion of the molded product as a first mold half and/or a second mold half move in an opening direction relative to one another.

According to one object of the present disclosure, the molding apparatus may comprise a mold comprising a first mold half and a second mold half. The first mold half and the second mold half may be operable together to define a mold cavity to form the molded product therein, with the first mold half and the second mold half separable at a parting line, arranged to open and close relative to one another in an opening direction of the mold and a closing direction of the mold, respectively, wherein the opening direction and closing direction are perpendicular to the parting line, and edge-wrap at least a portion of the substrate with the outer member. The molding apparatus may further comprise a trimming device operable to trim the outer member at the edge-wrapped portion of the molded product as the first mold half and/or the second mold half move in the opening direction relative to one another.

According to another object of the present disclosure, the edge-wrapped portion of the molded product may comprise an edge-wrapped perimeter edge of the molded product, and the trimming device may be operable to trim the outer member at the edge-wrapped perimeter edge of the molded product as the first mold half and/or the second mold half move in the opening direction relative to one another. Even more particularly, the edge-wrapped portion of the molded product may be at a perimeter edge of the substrate, and the trimming device may be operable to trim the outer member at the edge-wrapped portion of the molded member at the perimeter edge of the substrate as the first mold half and/or the second mold half move in the opening direction relative to one another.

According to another object of the present disclosure, the trimming device may include a trimming member which forms part of the first mold half. The first mold half trimming member may be a movable (extendable and retractable) member of the first mold half, particularly in the opening direction of the mold and the closing direction of the mold.

According to another object of the present disclosure, the first mold half trimming member is retractable when the mold is closed to trim at least a portion of the molded product.

According to another object of the present disclosure, the first mold half trimming member may comprise a trimming edge, and may more particularly be a shear edge. The first mold half trimming member may include a protruding lip, and the trimming edge may define an edge of the protruding lip. The protruding lip may provide a first mold half trimming member undercut to be occupied by the outer member when the molded product is formed in the mold cavity, wherein the first mold half trimming member undercut has an undercut dimension at least about equal to a thickness of the outer member.

According to another object of the present disclosure, the trimming device may include a trimming member which is part of the second mold half. The second mold half trimming member may be movable (extendable and retractable) along the parting line, particularly perpendicular to the opening direction of the mold and the closing direction of the mold. The second mold half trimming member may be extended when the trimming device is operable to trim the outer member from at least a portion of the molded product.

According to another object of the present disclosure, the second mold half trimming member may comprise a trimming edge, and may more particularly be a shear edge. The second mold half trimming member may include a protruding lip, and the trimming edge may define an edge of the protruding lip. The protruding lip may be operable to provide a second mold half trimming member undercut to be occupied by the outer member and the substrate member when the molded product is formed in the mold cavity and to wrap the outer member over an end of the substrate member, wherein the second mold half trimming member undercut has an undercut dimension about equal to a thickness of the outer member and the end of the substrate member.

According to another object of the present disclosure, the trimming edges may provide shearing means, particularly in the form of a pair of cooperating shearing edges with one shear edge provided by the first mold half and the other shear edge provided by the second mold half. The shearing edges may engage to shear the outer member at the edge-wrapped portion of the molded product as the first mold half and/or the second mold half move in the opening direction relative to one another.

According to another object of the present disclosure, a method is provided to trim a molded product which comprises an outer member and a substrate member layer. The method may comprise providing a molding apparatus comprising: a mold comprising a first mold half and a second mold half; the first mold half and the second mold half operable together to define a mold cavity to form the molded product therein, the first mold half and the second mold half separable at a parting line, arranged to open and close relative to one another in an opening direction of the mold and a closing direction of the mold, respectively, wherein the opening direction and closing direction are perpendicular to the parting line; and edge-wrap at least a portion of the substrate with the outer member; and a trimming device operable to trim at least a portion of the outer member from the molded product as the first mold half and/or the second mold half move in the opening direction relative to one another. The method may further comprise placing the outer member in the mold cavity; molding the substrate member in the mold cavity with the outer member to form the molded product; and operating the trimming device to trim the outer member at the edge-wrapped portion of the molded product wherein at least a portion of the first mold half and/or the second mold half move in the opening direction relative to one another to provide trimming of the molded product.

### BRIEF DESCRIPTION OF THE DRAWINGS

The above-mentioned and other features of this disclosure, and the manner of attaining them, will become more apparent and better understood by reference to the following description of embodiments described herein taken in conjunction with the accompanying drawings, wherein:
FIG. 1 is cross-sectional view of one embodiment of a molded product formed by a mold and a method according to the present disclosure;
FIG. 2A is cross-sectional view of an outer member which may be used with the present disclosure;
FIG. 2B is cross-sectional view of another outer member which may be used with the present disclosure;
FIG. 2C is cross-sectional view of another outer member which may be used with the present disclosure;
FIG. 2D is cross-sectional view of another outer member which may be used with the present disclosure;
FIG. 3 is a cross-sectional view of a molding apparatus according to one embodiment of the present disclosure;
FIG. 4 is a close-up view of a trimming device of the molding apparatus of FIG. 3 of the present disclosure;
FIG. 5 is a close-up view of the trimming device of the molding apparatus of FIG. 3 with a second mold half trimming member in a retracted position and an outer member of the product prior to forming the substrate;
FIG. 6 is a close-up view of the trimming device of the molding apparatus of FIG. 3 with the second mold half trimming member in a extended position and the outer member of the product prior to forming the substrate;
FIG. 7 is a close-up view of the trimming device of the molding apparatus of FIG. 3 with the second mold half trimming member in a extended position and the outer member of the product after forming the substrate;
FIG. 8 is a close-up view of the trimming device of the molding apparatus of FIG. 3 as a first mold half trimming member begins moving to trim the product; and
FIG. 9 is a close-up view of the trimming device of the molding apparatus of FIG. 3 as the first mold half trimming member continues to move after trimming the product.

### DETAILED DESCRIPTION

It may be appreciated that the present disclosure is not limited in its application to the details of construction and the arrangement of components set forth in the following description or illustrated in the drawings. The embodiments herein may be capable of other embodiments and of being practiced or of being carried out in various ways. Also, it may be appreciated that the phraseology and terminology used herein is for the purpose of description and should not be regarded as limiting.

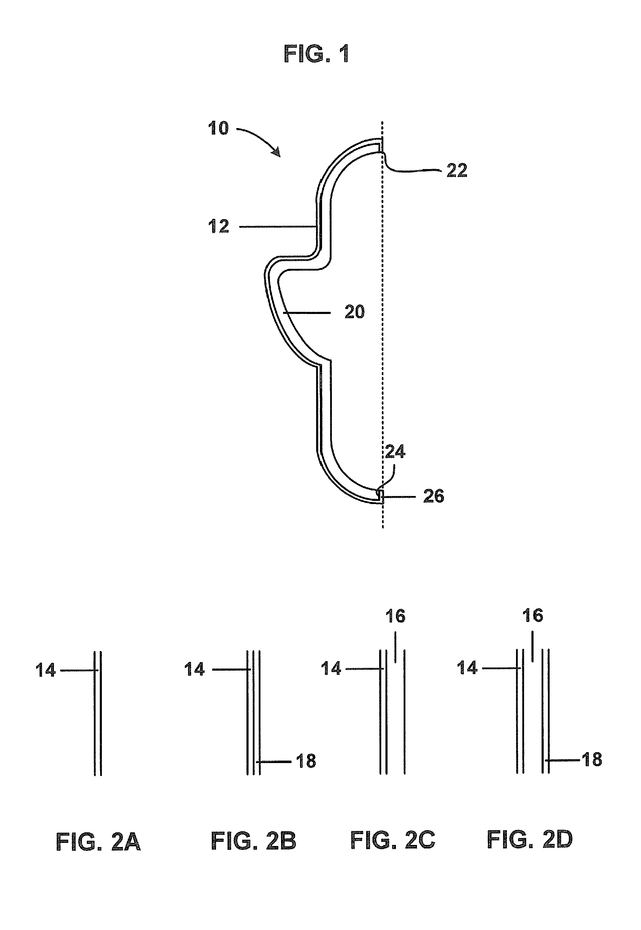

Referring now to FIG. 1, there is shown a molded product 10 produced in accordance with the present disclosure. As shown, molded product 10 comprises an outer member 12 and a substrate member 20. More particularly, as shown, molded product 10 may comprise an automotive interior trim panel, such as a side wall panel (e.g. door trim panel).

As shown, molded product includes a perimeter (90 degree) edge-wrap 26 of the edge of the substrate member 20 by the outer member 12. In the foregoing manner, when the panel is installed in a motor vehicle, the substrate member 20 is concealed from view, and the edge-wrap 26 of the outer member 12 is sandwiched between the substrate member 20 and the vehicle body (shown by the dotted line) to inhibit the outer member 12 from separating (delaminating) from the substrate member 20 and/or to better conceal the substrate member 20.

As shown in FIG. 2A, outer member 12 particularly comprises a pliable skin layer 14. Skin layer 14 may initially be in the form of a sheet (sheetstock) die-cut into individual pieces from roll stock. Skin may have a thickness in a range of 0.5 mm to 1.0 mm, and may comprise such materials as flexible (plasticized) polyvinyl chloride or a thermoplastic elastomer comprising or consisting of a polyolefin, such as polypropylene. The skin may include a texture (grain) on the outer surface thereof to enhance aesthetic appeal.

In alternative embodiments, as shown in FIGS. 2B-2D, in addition to skin layer 14, outer member 12 may include a cushion layer 16 and a thermal barrier layer 18, which both support the skin layer 14 and are intermediate to the skin layer 14 and substrate member 20.

As shown in FIG. 2B, outer member 12 may include a thermal barrier layer 18 to protect the skin layer 14 against damaging heat and/or pressure from the substrate 20 as it is formed behind the skin layer 14 as discussed in greater detail below. Barrier layer 18 may be a woven or non-woven fabric, such as a felt, or a solid (unfoamed) polymer layer such as polypropylene or other polyolefin.

As shown in FIG. 2C, outer member 12 may include a cushion layer 16 such as a closed-cell foam layer. The cushion layer 16 may have a thickness from 0.5 mm to 2.5 mm, and comprise materials such as flexible polyvinyl chloride foam, polyolefin foam such a polypropylene foam or polyethylene foam, or polyurethane foam.

As shown in FIG. 2D, outer member 12 may include both a cushion layer 16 and a thermal barrier layer 18, such as a 0.5 mm solid (unfoamed) polypropylene.

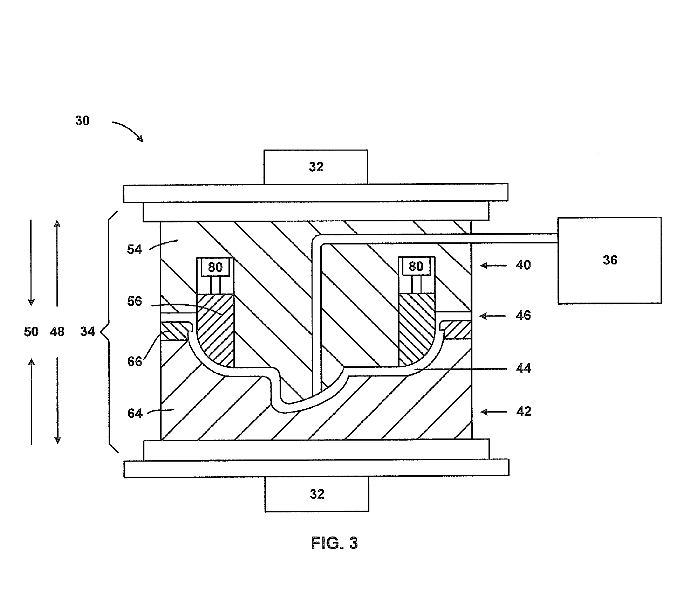

Referring now to FIG. 3, there is shown a molding apparatus 30 to form molded product 10. Molding apparatus 30 comprises a mold manipulator 32 and a mold 34. Among other operations, mold manipulator 32 may be used to open, close and clamp, such as by means of a press, mold 34 during forming of the molded product 10 therein. Molding apparatus 30 may further comprise a material delivery means 36 to deliver material for the molded product 10, such as for the substrate, to the mold 34. For example, material delivery means 36 may comprise the plasticating unit (e.g. reciprocating screw injection unit) of an injection molding machine or may comprise an extruder with or without an accumulator head.

As shown in FIG. 3, mold 34 comprises a first mold half 40 and a second mold half 42. The first mold half 40 and the second mold half 42 are operable together to define a mold cavity 44 to form the molded product 10 therein, and edge-wrap at least a portion of the substrate 20 with the outer member 12 as explained in greater detail below. The first mold half 40 and the second mold half 42 are also configured to separate at a parting line 46, and open and close relative to one another in an opening direction 48 of the mold 34 and a closing direction 50 of the mold 34, respectively, wherein the opening direction 48 and closing direction 50 are perpendicular to the mold parting line 46. It should be understood that opening or closing of mold 34 may be accomplished by moving first mold half 40 and/or second mold half 42 in the appropriate direction. Furthermore, as shown, mold manipulator 32 and mold 34 are arranged for mold 34 to open with a horizontal parting line, however the mold manipulator 32 and mold 34 may also be arranged for the mold 34 to open with a vertical parting line. When arranged as to provide a horizontal parting line, first mold half 40 may be referred to as the upper mold half, and second mold half 42 may be referred to as the lower mold half.

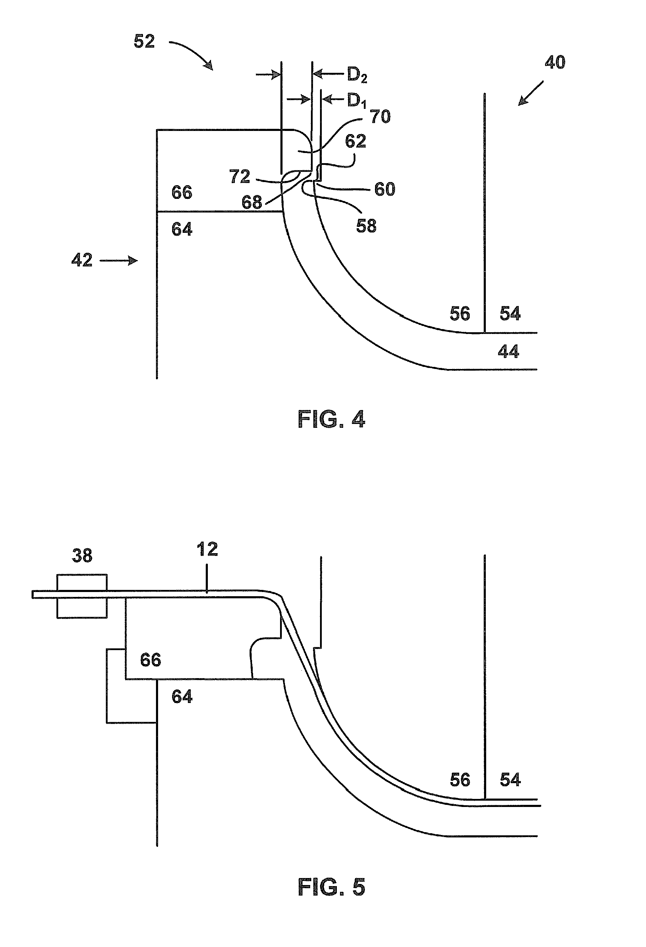

As best shown in FIG. 4, mold 34 further comprises a trimming device 52 operable to trim the outer member 12 at an edge-wrapped perimeter/peripheral edge of the molded product 10 as the first mold half 40 and/or the second mold half 42 move in the opening direction 48 relative to one another.

More particularly, the trimming device 52 is operable to trim the outer member at an edge-wrapped perimeter edge 22 of the molded product 10 as the first mold half 40 and/or the second mold half 42 move in the opening direction 48 relative to one another. Even more particularly, the trimming device 52 is operable to trim the outer member 12 at the edge-wrapped portion from the molded product 10 at a perimeter molded edge 22 of the substrate member 20 as the first mold half 40 and/or the second mold half 42 move in the opening direction 48 relative to one another.

The trimming device 52 includes a trimming member 56 which forms part of the first mold half 40. The first mold half (core) trimming member 56 is movable in the opening direction 48 of the mold (retractable) and the closing direction 50 of the mold 34 (extendable) relative to first mold half (core) stationary member 54. As shown, the first mold half trimming member 56 comprises a trimming edge 58, which may more particularly be a shear edge.

The first mold half trimming member 56 may be made of a harder material than first mold half stationary member 54. Furthermore, as separate pieces, the first mold half trimming member 56 and the first mold half stationary member 54 are movable simultaneously or sequentially in the opening direction 48 of the mold 34 as the trimming device 52 operates to trim the outer member 12 at the edge-wrapped portion of the molded product 10. However, it should be understood that the first mold half trimming member 56 and the first mold half stationary member 54 may be of one piece construction.

The first mold half trimming member 56 includes a protruding lip 60, and the trimming edge 58 defines an edge of the protruding lip 60. The protruding lip 60 is operable to provide a first mold half trimming member undercut 62 to be occupied by the outer member 12 when the molded product 10 is formed in the mold cavity 44. The first mold half trimming member undercut 62 may have an undercut dimension D₁ at least about equal to a thickness of the outer member 12, here skin 14 (e.g. ± 5%).

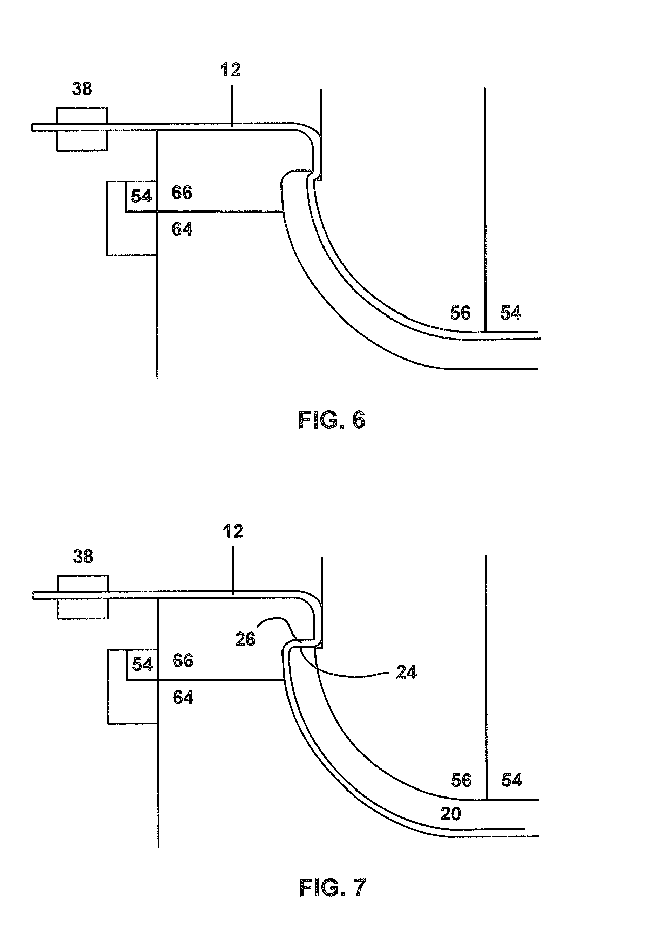

The trimming device 52 also includes a trimming member 66 which forms part of the second mold half 42. The second mold half trimming member 66 is movable (extendable and retractable) along (parallel to) the parting line 46, such as by operation of a hydraulic cylinder, perpendicular to the opening direction 48 of the mold 34 and the closing direction 50 of the mold 34 relative to second mold half stationary member 64. The second mold half trimming member 66 and the second mold half stationary member 64 may be held fixed relative to one another by a mechanical locking mechanism 54 (shown in FIG. 6) as the trimming device 52 operates to trim the outer member 12 at the edge-wrapped portion of the molded product 10.

As shown, the second mold half trimming member 66 comprises a trimming edge 68, which may more particularly be a shear edge. As such, the second mold half trimming member 66 may have increased hardness as compared to second mold half stationary member 64.

The second mold half trimming member 66 also includes a protruding lip 70, and the trimming edge 68 defines an edge of the protruding lip.70. The protruding lip 70 is operable to provide a second mold half trimming member undercut 72 to be occupied by the outer member 12 and the substrate member 20 when the molded product 10 is formed in the mold cavity 44 and to edge-wrap the outer member 12 over an end 24 of the substrate member 20, wherein the second mold half trimming member undercut 72 has an undercut dimension D₂ about equal to a thickness of the outer member 12 and the end 24 of the substrate member 20 (e.g. ± 5%).

Together, the trimming edges 58 and 68 may provide shearing means, particularly in the form of a pair of cooperating shearing edges with one shear edge (e.g. 58) provided by the first mold half 40 and the other shear edge (e.g. 68) provided by the second mold half 42. The edges 58, 68 are configured to engage to shear the outer member 12 from at least a portion of the molded product 10 as the first mold half 40 and/or the second mold half 42 move in the opening direction relative to one another at a distance about equal to a thickness of the outer member 12 (e.g. ± 5%).

Turning to FIG. 5, at the start of molding cycle with first mold half 40 and second mold half 42 completely separated (i.e. no overlap therebetween), outer member 12 is placed between first mold half 40 and second mold half 42. At this time, outer member 12 may be clamped or otherwise held by retention means 38 to retain the outer member 12 around a perimeter thereof, and inhibit wrinkles from forming during the molding process.

It may not be necessary to preform outer member 12 to a three dimensional shape prior to use. In such a situation, outer member 12 may be stretched by the first mold half 40 as the mold 34 closes in closing direction 50, and first mold half 40 enters the second mold half 42. While it may not be necessary to preform outer member 12 to a three dimensional shape prior to use, depending on the depth of draw, it may be advantageous to heat the outer member 12 prior to being stretched to reduce the tensile strength thereof and make the outer member 12 more pliable/conformable for three dimensional shaping.

In the event the outer member 12 is preformed prior to use with mold 34, the outer member 12 may be preformed by techniques such as vacuum forming, thermoforming, blow molding, slush (power or liquid) casting, rotational molding or injection molding.

As mold 34 closes, second mold half trimming member 66 may particularly be in a retracted position as not to damage the outer member 12 between the first mold half trimming member 56 and second mold half trimming member 66 as the mold 34 closes to full closure position.

As shown in FIG. 6, after the mold 34 is fully closed, second mold half trimming member 66 may be extended into its position during molding of substrate 20. As shown, outer member 12 may be stretched around the shape of second mold half 42. In alternative embodiments, the second mold half 42 may be configured to apply vacuum to mold cavity 44 which may draw outer member 12 to the mold cavity member 64.

As shown in FIG. 7, the substrate material may then be introduced into the mold cavity 44 from material delivery means 36 to mold substrate member 20. During the molding of substrate member 20, the molding pressure therewith may be understood to heat and force outer member 12 to take on a shape of the second mold half 42. Additionally, during this time, mold 34 acts to form edge-wrap 26 around the edge 24 of substrate 20 on molded product 10.

In the case of a thermoplastic substrate, the material delivery means 36 may comprise, for example, a thermoplastic injection unit or an extruder configured to deliver a thermoplastic material such as a relatively high melt flow polypropylene to the mold 34. In the case of thermoset substrate, the material delivery means may comprise a mixhead which mixes reactant precursors such as polyurethane precursors (i.e. polyol and isocyanate) received from a positive displacement pump, such as of the rotary-type or reciprocating type.

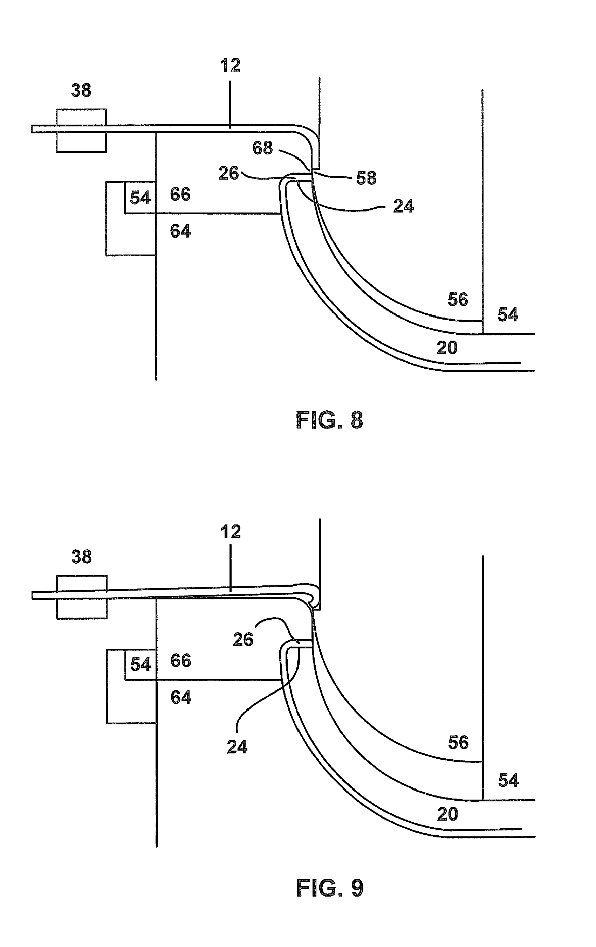

As shown in FIG. 8, once the substrate 20 has adequately solidified, either cooled and/or cured depending on the material, first mold half trimming member 56 of the first mold half 40 is moved by the operation of hydraulic cylinder 80 (see FIG. 3) in the opening (retracted) direction 48 relative to second mold half 42 to initiate the opening sequence of the mold 34. In doing so, trimming edges 58 and 68 cooperate with a shearing motion to sever the outer member 12 at the perimeter edge 22 of substrate member 20 and molded product 10. As shown in FIG. 9, first mold half trimming member 56 of the first mold half 40 continues to move in the opening direction 48 relative to second mold half 42 in the opening sequence of the mold 34 to complete the trim operation.

Thereafter, second mold half trimming member 66 may be retracted from its extended position to its retracted position, and the first mold half 40 is moved in the opening direction 48 relative to second mold half 42 to complete opening of the mold 34. With the foregoing sequence, it may be understood that the molded product 10 will remain with the first mold half 40 during mold opening and thereafter be demolded therefrom. Furthermore, it may be desirable to move (retract) the first mold half trimming member 56 before moving the remainder of first mold hald 40 (sequentially) to reduce potential distortion of the molded product 10 during trimming.

It should be understood that both the first mold half trimming member 56 and the first mold half stationary member 54 may also move simultaneously as the mold 34 opens (in which case cylinder 80 may be eliminated), prior to any moving of the second mold half trimming member 66 from its extended position to its retracted position. In this manner, it may be understood that molded product 10 may be demolded from the second mold half 42 after opening of the mold 34 and retraction of the second mold half trimming member 66 from its extended position to its retracted position.

While a preferred embodiment of the present invention has been described, it should be understood that various changes, adaptations and modifications can be made therein without departing from the spirit of the invention and the scope of the appended claims. The scope of the invention should, therefore, be determined not with reference to the above description, but instead should be determined with reference to the appended claims along with their full scope of equivalents. Furthermore, it should be understood that the appended claims do not necessarily comprise the broadest scope of the invention which the Applicant is entitled to claim, or the only manner(s) in which the invention may be claimed, or that all recited features are necessary.

## Claims

1. A molding apparatus to trim a molded product which comprises an outer member and a substrate member, the molding apparatus comprising:
a mold comprising a first mold half and a second mold half;
the first mold half and the second mold half operable together to define a mold cavity to form the molded product therein, and edge-wrap at least a portion of the substrate with the outer member;
a trimming device operable to trim the outer member at the edge-wrapped portion of the molded product as the first mold half and/or the second mold half move in an opening direction relative to one another; and
the trimming device comprising shearing means, the shearing means comprising a pair of cooperating shearing edges with one shear edge provided by the first mold half and the other shear edge provided by the second mold half.

2. The molding apparatus of claim 1 wherein:
the edge-wrapped portion of the molded product comprises an edge-wrapped perimeter edge of the molded product; and
the trimming device is operable to trim the outer member at the edge-wrapped perimeter edge of the molded product as the first mold half and/or the second mold half move in the opening direction relative to one another.

3. The molding apparatus of claim 1 wherein:
the edge-wrapped portion of the molded product is at a perimeter edge of the substrate;
and
the trimming device is operable to trim the outer member at the edge-wrapped portion of the molded product at the perimeter edge of the substrate as the first mold half and/or the second mold half move in the opening direction relative to one another.

4. The molding apparatus of one of the preceding claims wherein:
the trimming device includes a trimming member of the first mold half, and/or a trimming member of the second mold half.

5. The molding apparatus of claim 4 wherein:
the first mold half trimming member is an extendable and retractable member of the first mold half, and/or
the first mold half trimming member is retractable when the mold is closed to trim at least a portion of the molded product.

6. The molding apparatus of claim 4 or 5 wherein:
the first mold half trimming member comprises a trimming edge.

7. The molding apparatus of one of claims 4 to 6 wherein:
the first mold half trimming member includes a protruding lip; and
the trimming edge defines an edge of the protruding lip.

8. The molding apparatus of claim 7 wherein:
the protruding lip provides a first mold half trimming member undercut to be occupied by the outer member when the molded product is formed in the mold cavity, wherein the first mold half trimming member undercut has an undercut dimension at least about equal to a thickness of the outer member.

9. The mold apparatus of one of claims 4 to 8 wherein:
the first mold half and the second mold half are separable at a parting line; and
the second mold half trimming member is extendable and retractable along the parting line.

10. The molding apparatus of one of claims 4 to 9 wherein:
the second mold half trimming member is extendable when the mold is closed, and/or
the second mold half trimming member is extended when the trimming device is operable to trim the outer member at the edge-wrapped portion of the molded product.

11. The molding apparatus of one of claims 4 to 10 wherein:
the second mold half trimming member comprises a trimming edge, such as a shear edge.

12. The molding apparatus of claim 11 wherein:
the second mold half trimming member includes a protruding lip; and
the trimming edge defines an edge of the protruding lip.

13. The molding apparatus of claim 12 wherein:
the protruding lip is operable to provide a second mold half trimming member undercut to be occupied by the outer member and the substrate member when the molded product is formed in the mold cavity and to edge-wrap the outer member over an end of the substrate member, wherein the second mold half trimming member undercut has an undercut dimension about equal to a thickness of the outer member and the end of the substrate member.

14. The molding apparatus of one of preceding claims wherein:
the shear edges engage to shear the outer member at the edge-wrapped portion of the molded product as the first mold half and/or the second mold half move in the opening direction relative to one another.

15. A method to trim a molded product which comprises an outer member and a substrate member layer, the method comprising:
providing a molding apparatus comprising:
a mold comprising a first mold half and a second mold half;
the first mold half and the second mold half operable together to define a mold cavity to form the molded product therein, and edge-wrap at least a portion of the substrate with the outer member; and
a trimming device operable to trim the outer member at the edge-wrapped portion of the molded product as the first mold half and/or the second mold half move in an opening direction relative to one another.
placing the outer member in the mold cavity;
molding the substrate member in the mold cavity with the outer member to form the molded product; and
operating the trimming device to trim the outer member at the edge-wrapped portion of the molded product as the first mold half and/or the second mold half move in the opening direction relative to one another.
